# EUROPEAN PATENT SPECIFICATION

(11) **EP 4 383 407 B1**
(45) Date of publication and mention of the grant of the patent: **04.11.2026**
(21) Application number: 22211613.9
(22) Date of filing: 06.12.2022
(51) Int. Cl.: H01M 10/653, H01M 10/6568, H01M 50/244, H01M 50/249, H01M 10/613, H01M 10/625

(54) **SEMI-SUBMERGED MODULE COOLING**
HALB EINGETAUCHTE MODULKÜHLUNG
REFROIDISSEMENT DE MODULE SEMI-IMMERGÉ

(43) Date of publication of application: 12.06.2024
(73) Proprietor: Rimac Technology LLC, 10431 Sveta Nedelja (HR)
(72) Inventor: Kramar, Karlo, 40316 Vratisinec (HR)
(74) Representative: Hoffmann Eitle

(56) References cited:
- WO-A1-2019/125284
- WO-A1-2021/214794
- WO-A1-2022/069910
- CN-A- 114 464 923
- CN-A- 114 976 365
- GB-A- 2 605 114
- US-A1- 2016 172 727
- US-A1- 2022 328 916

## Description

### Technical field

The present invention generally relates to a battery module and more particularly, to a battery module with semi-submerged module cooling.

### Technical background

In a battery module, such as a battery module to be used in a variety of electric vehicles, a plurality of battery cells may be placed in the battery module to provide necessary power and voltage. In such a battery module, it is important that the battery module has a cooling system to not overheat the battery module and also to preserve high charging or discharging rate. For example, a thermal runaway which is one of the primary risks in lithium-ion batteries may occur if a battery module is not cooled down. It is a phenomenon in which a battery cell enters an unstoppable and uncontrollable chain reaction, and which causes a sudden release of energy stored in the battery cell. Also, batteries such as lithium-ion batteries have a preferred temperature region for exhibiting good performance. Thus, to prevent overheating of the battery and to ensure good performance of the battery, it is important that the battery module is equipped with the cooling system. For example, a coolant may be used to cool down the battery module.

However, the battery module filled with the coolant may increase a weight of the battery module and thereby increase a total weight of an electric vehicle using the battery module. This can be a problem, especially for vehicles in which high performance is needed. Furthermore, considering that a heat produced by a battery module may be hotter on a certain side of the plurality of battery cells where there are poles of the plurality of battery cells and interconnections, the cooling system can be further optimized. Moreover, the most of cooling systems using a coolant has risks such as leaking, corrosion and clogging due to their nature of using the coolant. Therefore, there is a further need to optimize the cooling system to use the coolant only where it is necessary.

CN 114 464 923 A or WO 2022 069910 A1 relate to fast-charging lithium-ion battery module structures.

US 2016/172727 A1 relates to an automobile battery pack apparatus and, in particular, to a method and apparatus to make such a battery pack assembly more resistant to thermal runaway and to reduce potential harm to persons in case an accident does occur.

US 2022/328916 A1 relates to a battery pack core for an aerospace battery.

### Summary

The above problems are solved by the subject-matter of independent claims. Preferred embodiments are given by the subject-matter of dependent claims. Further examples are provided for facilitating the understanding of the invention. Accordingly, there is provided a battery module comprising: a plurality of battery cells, each having an elongated housing and having a pole at one end of the elongated housing; a module housing arranged to accommodate said plurality of battery cells; and a cell holder arranged to hold the individual ones of the plurality of battery cells and at least forming part of a division of an interior of the module housing into a first fluid chamber and a second fluid chamber; wherein the cell holder forms around each battery cell a first tight fit around the elongated housing at a first position recessed from the one end of the elongated housing and a second tight fit around the elongated housing at a second position recessed from an opposing end of the elongated housing to form a space between said first and second tight fits, wherein the battery module further comprises: a fluid inlet port for allowing a coolant flow into the first fluid chamber; and a fluid outlet port for allowing a coolant flow from the second fluid chamber; wherein the first fluid chamber and the second fluid chamber are connected in a way that a coolant can pass from the first fluid chamber to the second fluid chamber.

The present invention can provide a battery module which requires less coolant compared to conventional technologies. Also, the present invention can achieve a weight reduction in a battery module.

### Brief description of the drawings

Embodiments of the present invention, which are presented for better understanding the inventive concepts, but which are not to be seen as limiting the invention, will now be described with reference to the figures in which:
- Figure 1: shows schematically a battery module according to an embodiment of the present invention;
- Figure 2: shows schematically a battery module with a fluid inlet port and a fluid outlet port according to an embodiment of the present invention;
- Figure 3: shows schematically a battery module with a filling material according to an embodiment of the present invention;
- Figure 4: shows schematically a battery module with cylindrical battery cells according to an embodiment of the present invention;
- Figure 5: shows schematically a battery module with a first lid, a second lid and an outer wall according to an embodiment of the present invention;
- Figure 6: shows schematically a battery module with a plurality of holes located on the outer wall according to an embodiment of the present invention;
- Figure 7: shows schematically a battery module with a third lid and the fourth lid according to an embodiment of the present invention;
- Figure 8: shows schematically a battery module with a rib according to an embodiment of the present invention; and
- Figure 9: shows schematically a battery module with a rib according to an embodiment of the present invention.

### Detailed description

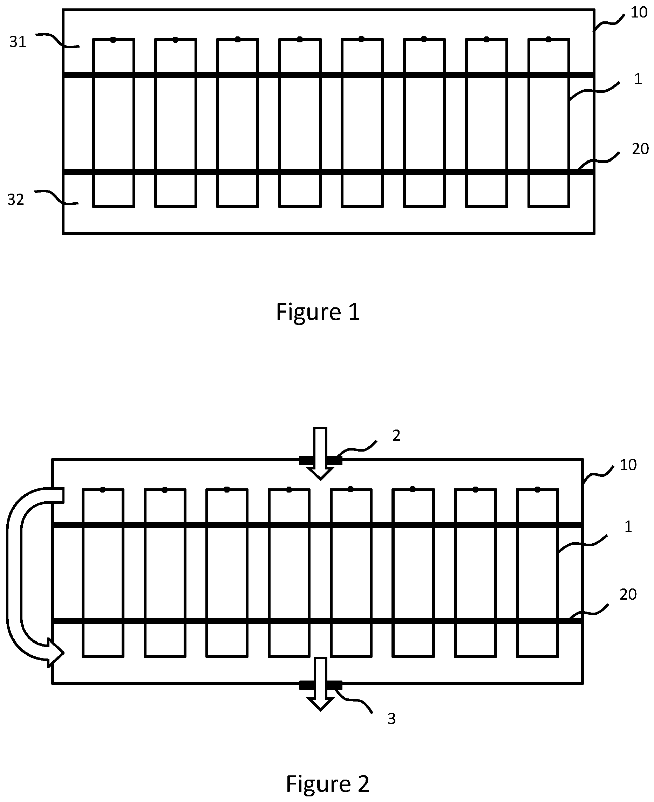

Figure 1 shows schematically a battery module according to an embodiment of the present invention. The battery module comprises a plurality of battery cells 1, each having an elongated housing and having a pole at one end of the elongated housing; a module housing 10 arranged to accommodate said plurality of battery cells 1; and a cell holder 20 arranged to hold the individual ones of the plurality of battery cells 1 and at least forming part of a division of an interior of the module housing 10 into a first fluid chamber 31 and a second fluid chamber 32; wherein the cell holder 20 forms around each battery cell a first tight fit around the elongated housing at a first position recessed from the one end of the elongated housing and a second tight fit around the elongated housing at a second position recessed from an opposing end of the elongated housing to form a space between said first and second tight fits.

In the context of the present disclosure, the term "tight" is to be understood as impermeable in a way that a coolant, either in liquid or gas form, does not flow or go through. That is, the first tight fit and the second tight fit are impermeable.

Furthermore, the first position recessed from the one end of the elongated housing means that the first position is offset from the one end of the elongated housing. Similarly, the second position recessed from the opposing end of the elongated housing means that the second position is offset from the opposing end of the elongated housing.

Also, the first position and the second position may be relative to an axial direction of the elongated housing. Since the first position and the second position are relative to the axial direction of the elongated housing, the elongated housing can be divided into three parts on the axial direction of the elongated housing; from the one end of the elongated housing to the first position, from the first position to the second position, and from the second position to the opposing end of the elongated housing.

Moreover, the first tight fit at the first position and the second tight fit at the second position may and may not have a same distance each from the one end of the elongated housing and the opposing end of the elongated housing. Preferably, the first position and the second position may be apart from each end of the elongated housing with a same distance. However, the battery module of the present embodiment is not limited thereto.

In the battery module of the present embodiment, the first position and the second position may not be fixed and can range from 0 mm to 40 % of battery cell height. The expression "0 mm" may be understood as where only ends of each of the plurality of battery cells 1 may be exposed to a coolant, that is, touching of the coolant may not be excluded. By adjusting the first position and the second position closer to each end of the plurality of battery cells, the battery module may achieve a weight reduction, if the battery module is provided with the coolant. By exposing the plurality of battery cells 1 more to a coolant, if the battery module is provided with the coolant, a higher cooling efficiency may be achieved. Thus, for maximum cooling efficiency, the first position and the second position may be offset by 40 % of battery cell height from each end of each of the plurality of battery cells 1. That is, the first position and the second position can be adjusted according to use cases.

The battery module of the embodiment may have a variety of module orientations. In other words, an orientation of the battery module is not limited to a specific direction and the battery module can be used in any orientation.

By having the space between the first tight fit and the second tight fit, it is possible to require, for the battery module of the present embodiment, less coolant usage in battery module cooling.

Furthermore, in the battery module according to present embodiment, it is possible to increase safety with regard to thermal runaway events. Since each pole of each of the plurality of battery cells 1, where it can be hotter than the other part of each of the plurality of batteries, is located in a space where a coolant can flow in the battery module, if the battery module is provided with the coolant, safety of the battery module may be increased, and the thermal runaway events may be avoided.

According to the present invention, the battery module comprises a cooling fluid also referred as coolant. The coolant may be, for example, a liquid coolant such as dielectric oil or even a gas.

The battery module may further comprise a fluid inlet port 2 for allowing a coolant flow into the first fluid chamber 31; and a fluid outlet port 3 for allowing a coolant flow from the second fluid chamber 32; wherein the first fluid chamber 31 and the second fluid chamber 32 are connected in a way that a coolant can pass from the first fluid chamber 31 to the second fluid chamber 32.

Figure 2 shows schematically the battery module according to an embodiment of the present invention. Although it is shown in Figure 2 as the first fluid chamber 31 and the second fluid chamber 32 are connected by a path that is located outside of the battery module, this illustration is merely for an understanding of the invention and the embodiment of the present invention is not limited thereto. Furthermore, arrows depicted in Figure 2 are merely to understand a coolant flow if the battery module is provided with a coolant. That is, the arrows depicted in Figure 2, as well as in other drawings of the present disclosure, may not imply a structural element.

In the battery module of the present embodiment, positions of the fluid inlet port 2 and the fluid outlet port 3 may be each located on any part of the first fluid chamber and the second fluid chamber depending on use cases. Furthermore, shapes and dimensions of the fluid inlet port 2 and the fluid outlet port 3 may be same or different.

In the first fluid chamber 31, especially where poles of the plurality of battery cells 1 are located, bigger temperature difference may be expected and a temperature difference may be smaller at the opposing end of each of the plurality of battery cells 1. That is, a part closer to poles of the plurality of battery cells 1 may have more heat generation. Thus, it is important that the battery module enables a coolant to touch this part, specifically, the poles of the plurality of battery cells 1 and the interconnections, if the battery module is used with the coolant.

Thus, by allowing the coolant flow first into the first fluid chamber 31, where the poles of the plurality of battery cells 1 are located, it may be possible to optimize the battery module to achieve an efficient cooling system.

Moreover, the battery module according to the present embodiment may enable the plurality of battery cells 1 to have a temperature difference smaller than 5 °C within each of the plurality of battery cells 1 by connecting the first fluid chamber 31 and the second fluid chamber 32 in a way that a coolant can pass from the first fluid chamber 31 to the second fluid chamber 32.

The battery module may drive the coolant flow on the short side of the battery module to minimize pressure drop and temperature arise in the coolant flow. That is, the fluid inlet port 2 and the fluid outlet port 3 may be located on a side of the battery module so that the location of the fluid inlet port 2 and the fluid outlet port 3 shorten a path of the coolant flow allowed into the first fluid chamber 31, passed from the first fluid chamber 31 to the second fluid chamber 32 and allowed to leave from the second fluid chamber 32 and thereby preventing the pressure drop in the coolant flow and minimizing the temperature arise caused by cooling the plurality of the battery cells 1.

Furthermore, it may be possible to provide a single flow on both ends of the plurality of battery cells 1 to minimize system complexity. The single flow may mean that the coolant flow is in one direction or substantially in one direction which can be understood as, if the battery module is provided with a coolant, the coolant entering through the fluid inlet port 2 would exit the first fluid chamber 31 only through one side of the first fluid chamber 31 and the coolant entering the second fluid chamber 32 through one side of the second fluid chamber 32 would exit the second fluid chamber 32 only through the fluid outlet port 3.

Moreover, it may be possible to further optimize performance of the battery module by having variability between the fluid inlet port 2 and the fluid outlet port 3, that is, by having different shapes and dimensions of the fluid inlet port 2 and the fluid outlet port 3. Also, both shape and thickness of coolant flow layer of the battery module may be further optimized depending on use cases by adjusting the shapes and dimensions of the fluid inlet port 2 and the fluid outlet port 3, and locations of the first tight fit and the second tight fit.

According to an embodiment of the present invention, the space between the first tight fit and the second tight fit may be void. In this case, the battery module according to the present embodiment may reduce a total weight of the battery module. Since the space may be void, that is, not to be filled with a coolant, if the battery module is used with the coolant, the battery module may achieve a weight reduction compared to a conventional battery module without such a void space.

According to another embodiment of the present invention, a filling material 4 may be arranged in the space between the first tight fit and the second tight fit. The filling material 4 may have lesser density than a coolant, if the battery module is used with the coolant. That is, for the battery module further comprising a coolant, the filling material 4 may have lesser density than the coolant. The expression of "if the battery module is provided with a coolant", "if the battery module is used with a coolant" or any other equivalent expression, it may be understood that the battery module further comprises the coolant. In this case, the battery module according to the present embodiment may reduce a total weight of the battery module. Since the space may be filled with the filling material 4 having lesser density than the coolant, if the battery module is used with the coolant, the battery module may achieve a weight reduction compared to a conventional battery module without such a filled space.

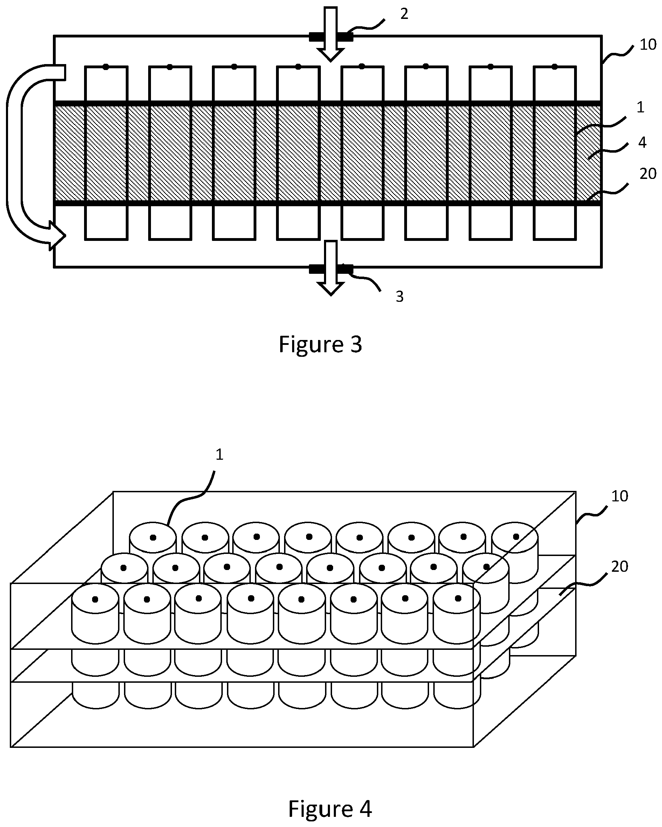

As it can be seen in Figure 3, the space may be filled with the filling material 4. Thus, the battery module may be a semi-submerged battery module, that is, the plurality of battery cells 1 may be not fully submerged in a coolant, if the battery module is provided with the coolant.

The density of the filling material 4, however, may be not limited to be lesser than a density of the coolant. Independent of the density of the filling material 4, the battery module may be able to reduce a necessary amount of the coolant as there is the space in the battery.

The filling material 4 may be a porous material composed of a solid part and a void part. For example, the filling material 4 may be a foam such as polyurethane, polystyrene or expanded polystyrene. However, the filling material 4 may be not limited to these examples and may even be a 3D printed lattice.

Also, the density of the filling material 4 may be less than 800 kg/m3. Since a density of dielectric oil, which can be used as a coolant for the battery module, or other coolants may be greater than the density of the filling material 4.

Thus, a weight reduction in the battery module may be achieved.

According to the embodiment of the present invention, where there may be the filling material 4 arranged in the space of the cell holder 20, the cell holder 20 may be formed from thermoplastic. Also, the cell holder 20 may be overmolded around the filling material 4.

Thermoplastic is a material that is moldable at a certain elevated temperature and solidifies upon cooling. Therefore, the cell holder 20 being formed from thermoplastic may be adequate for overmolding.

In this way, the battery module according to the present embodiment may not require any bonding between the filling material 4 and the cell holder 20. Furthermore, since the overmolded cell holder may not only bond the filling material 4 with the cell holder 20 but also seal the filling material 4, it may be possible to ensure that the first tight fit and the second tight fit are impermeable.

As shown in Figure 4, the elongated housing of each of the plurality of battery cells 1 of the battery module may be cylindrical. Furthermore, the plurality of battery cells 1 may be arranged vertically next to each other. The plurality of battery cells 1 may be arranged vertically in a two-dimensional array but also in a zig-zig arrangement or another arrangement.

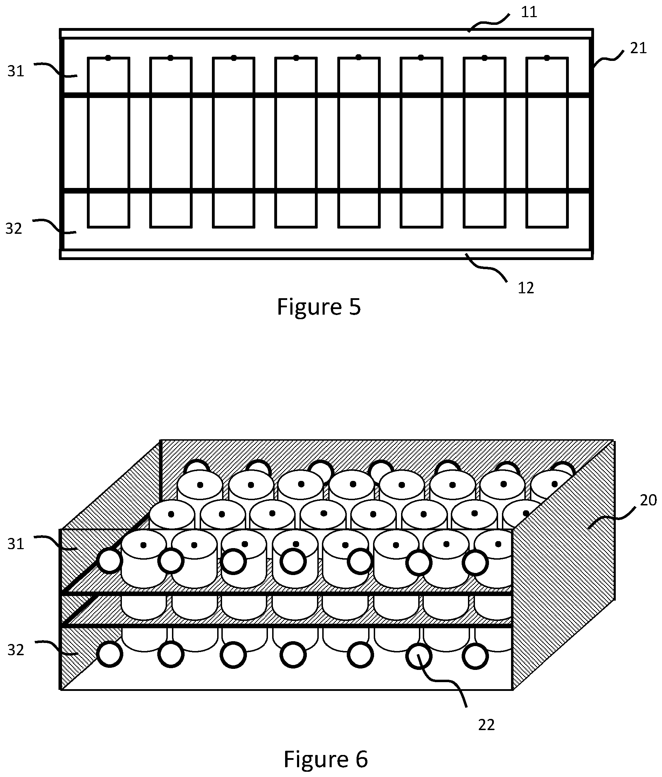

As shown in Figure 5, the module housing 10 may comprise a first lid 11 arranged at least over the one end of the elongated housing of each of the plurality of battery cells 1 and a second lid 12 arranged at least over the opposing end of the elongated housing of each of the plurality of battery cells 1; and the cell holder 20 further forms an outer wall 21 between the first lid 11 and the second lid 12.

In the battery module, the first fluid chamber 31 may be formed between the first tight fit and the first lid 11, and also by the outer wall 21. Also, the second fluid chamber 32 may be formed between the second tight fit and the second lid 12, and also by the outer wall 21. That is, the first fluid chamber 31 may be defined by the first tight fit, the first lid 11 and the outer wall 21, and the second fluid chamber 32 may be defined by the second tight fit, the second lid 12 and the outer wall 21.

The first lid 11 and the second lid 12 may be configured to seal each the first fluid chamber 31 and the second fluid chamber 32. Thus, if the battery module is provided with a coolant, the coolant in the first fluid chamber 31 and the second fluid chamber 32 may be prevented from going out.

As shown in Figure 6, the battery module may further comprise a plurality of holes 22 located on the outer wall 21 and accessible to the first fluid chamber 31 and the second fluid chamber 32. Note that, although the cell holder 20 has been illustrated without one side of the outer wall 21, this is merely for an illustrative purpose and the hatched part in Figure 6 does not limit the cell holder 20 or the outer part 21.

The plurality of holes may be in different shapes and dimensions. That is, the plurality of holes can be further optimized depending on use cases by adjusting both shapes and dimensions of the plurality of holes. Furthermore, each of the plurality of holes may have same shape and dimension but also different shapes and dimensions to each other.

The battery module may further comprise: a third lid 13 and a fourth lid 14 may be located on opposite sides to each other and in parallel with an axial direction of the plurality of battery cells 1, wherein the fluid inlet port 2 and the fluid outlet port 3 may be located on the fourth lid 14, and the first fluid chamber 31 and the second fluid chamber 32 may be connected through a space between the third lid 13 and a part of the outer wall 21 facing the third lid 13. Specifically, the first fluid chamber 31 and the second fluid chamber 32 may be connected through the space between the third lid 13 and the part of the outer wall 21 facing the third lid 13 in a way that a coolant can pass from the first fluid chamber 31 to the second fluid chamber 32.

The third lid 13 and the fourth lid 14 may be configured to seal each the space between the third lid 13 and the part of the outer wall 21 facing the third lid 13, and a space between the fourth lid 14 and a part of the outer wall 21 facing the fourth lid 14. Thus, the third lid 13 and the fourth lid 14 may be configured to have a form which is appropriate to seal corresponding space. Therefore, if the battery module is provided with a coolant, the coolant in these spaces may be prevented from going out.

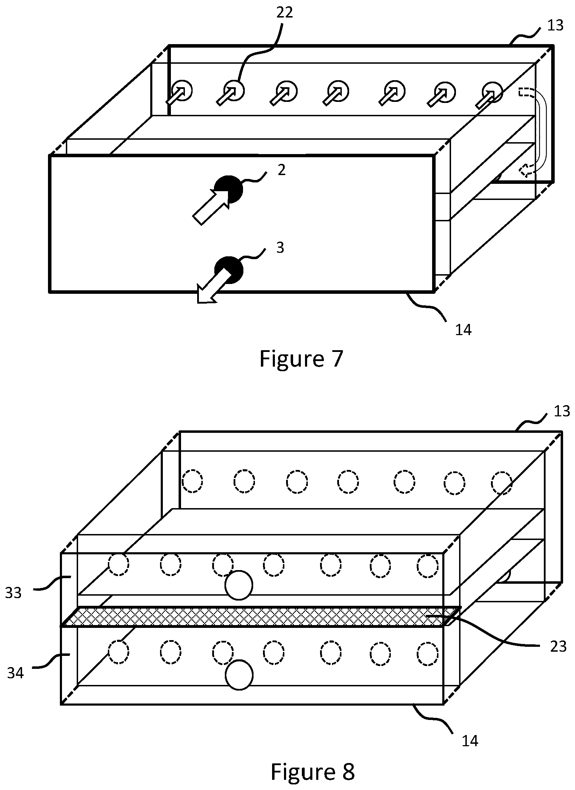

As shown in Figure 7, in case a coolant is provided in the battery module, the coolant may enter through the fluid inlet port 2 into the space between the fourth lid 14 and the part of the outer wall 21 facing the fourth lid 14, then enter through the plurality of holes located on the outer wall into the first fluid chamber 31, flow into the first fluid chamber 31 while touching the poles and a submerged part of the plurality of battery cells 1 and the interconnections, enter through the plurality of holes located on the outer wall 21 into a space between the third lid 13 and the part of the outer wall 21 facing the third lid 13, and then go around making a U-turn.

After the U-turn, that is, after a direction of the coolant flow is changed in the space between the third lid 13 and the part of the outer wall 21 facing the third lid 13, the coolant may enter through the plurality of holes located on the outer wall 21 into the second fluid chamber 32, flow into the second fluid chamber 32 while touching at least a submerged part of the plurality of battery cells 1, then enter through the plurality of holes located on the outer wall 21 into the space between the fourth lid 14 and the part of the outer wall 21 facing the fourth lid 14, and then leave the battery module through the fluid outlet port 3 located on the fourth lid 14.

Although Figure 7 is illustrated with the plurality of holes, this is merely for an illustrative purpose and the third lid 13 and the fourth lid 14 may not be limited to be used with the plurality of holes. For example, the third lid 13 and the fourth lid 14 may be configured to the battery module illustrated in Figure 2 where the fluid inlet port 2 and the fluid outlet port 3 are defined.

Furthermore, the space between the fourth lid 14 and the part of the outer wall 21 facing the fourth lid 14 where the coolant can enter through the fluid inlet port 2 and where the coolant can leave through the fluid outlet port 3 may be separated in a way that the coolant that has entered through the fluid inlet port 2 and the coolant that has left through the fluid outlet port 3 would not be mixed.

This separation of the space between the fourth lid 14 and the part of the outer wall 21 facing the fourth lid 14 may be achieved by a rib. As shown in Figure 8, the cell holder 20 of the battery module may further comprise: a rib 23 configured to at least form part of a division of a space between the fourth lid 14 and a part of the outer wall 21 facing the fourth lid 14 into a fluid inlet chamber 33 and a fluid outlet chamber 34.

Further to separating of the space between the fourth lid 14 and the part of the outer wall 21 facing the fourth lid 14 into the fluid inlet chamber 33 and the fluid outlet chamber 34, the rib 23 may be configured to seal a space between the fluid inlet chamber 33 and the fluid outlet chamber 34.

For example, the rib 23 may define a space between the fluid inlet chamber 33 and the fluid outlet chamber 34. The space between the fluid inlet chamber 33 and the fluid outlet chamber 34 may be sealed so that a coolant, if the coolant is provided in the battery module, would not be filled in the space between the fluid inlet chamber 33 and the fluid outlet chamber 34. Therefore, the rib 23 may be configured to seal a space between the fluid inlet chamber 33 and the fluid outlet chamber 34.

The sealing of the space by the rib 23 may be achieved in different ways. For example, the fourth lid 14 may have a groove where the rib 23 can be placed, and the rib 23 may be glued to the groove so that the space between the fluid inlet chamber 33 and the fluid outlet chamber 34 can be sealed. Also, a part of rib 23 may be welded by a laser welding, that is a material of the rib 23 may be melted and connected to the fourth lid 14 to seal the space between the fluid inlet chamber 33 and the fluid outlet chamber 34.

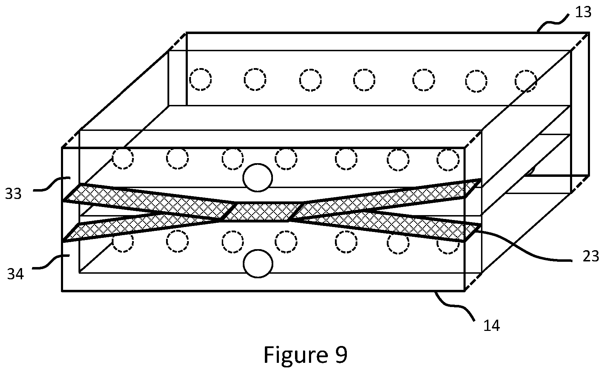

As shown in Figure 9, a distance between the fluid inlet chamber 33 and the fluid outlet chamber 34 may be greater on distal parts of the fluid inlet chamber 33 and the fluid outlet chamber 34. That is, the space between the fluid inlet chamber 33 and the fluid outlet chamber 34 may have different distances between the fluid inlet chamber 33 and the fluid outlet chamber 34, for example, in distal and central parts of the space. The distal part may be understood as a peripheral part or a part that is closer to an edge than a center.

By having a greater distance between the fluid inlet chamber 33 and the fluid outlet chamber 34 on distal parts, the rib 23 may achieve uniform cooling by enabling a faster distribution of a coolant, if the coolant is provided in the battery module, allowed into the fluid inlet port 2 to the plurality of holes located on the outer wall 21.

However, configuration of the rib 23 may be not limited to any form or orientation and may be adjusted to use cases.

Furthermore, the rib 23 may be configured to support a part of the outer wall 21. Since the rib 23 may be located next to the outer wall 21, the rib 23 may support the outer wall 21 to prevent bulging of the battery module. That is, the rib 23 may support the outer wall 21 to increase structural stability of the battery module.

The cell holder 20 of the present invention may further comprise a first sealant and a second sealant, each further making the first tight fit and the second tight fit.

The first sealant and the second sealant may be formed from epoxy, but their material is not limited to any type. For example, the material for the first sealant and the second sealant may be an insulating liquid compound that may be used in potting. Moreover, the materials for the first sealant and the second sealant may be same or different.

The cell holder 20 of the present invention may be used independently in some other applications. The cell holder 20 of the present invention may be not limited to a specific battery module.

According to an embodiment of the present invention, the cell holder 20 may be manufactured by a method of manufacturing the cell holder. The method may comprise: providing a filling material; overmolding a cell holder around the filling material; and providing a plurality of holes in the cell holder.

The filling material may be provided for overmolding the cell holder around the filling material.

The cell holder may be overmolded around the filling material until two parts, the cell holder and the filling material, are solidified. That is, the cell holder and the filling material may be bonded without any additional adhesives.

The plurality of holes may be provided for the plurality of battery cells 1. Thus, the plurality of holes may be provided with appropriate dimensions for the plurality of battery cells 1.

Furthermore, providing the plurality of holes may mean machining the plurality of holes in the cell holder. For example, the plurality of holes may be drilled into the cell holder. In this case, it can be understood that the filling material around which is overmolded with the cell holder is machined together with the cell holder.

Providing the plurality of holes may be understood as providing each of the plurality of holes vertically next to each other. In other words, providing the plurality of holes can be understood as providing each of the plurality of holes parallel and adjacent to each other.

A battery module according to another embodiment of the present invention may be manufactured by a method of manufacturing the battery module. The method may comprise: providing a plurality of battery cells 1, each having an elongated housing and having a pole at one end of the elongated housing; providing a module housing 10 to accommodate the plurality of battery cells 1; providing a cell holder 20 arranged to hold the individual ones of the plurality of battery cells 1 and at least forming part of a division of an interior of the module housing 10 into a first fluid chamber 31 and a second fluid chamber 32, wherein the cell holder 20 forms around each battery cell a first tight fit around the elongated housing at a first position recessed from the one end of the elongated housing and a second tight fit around the elongated housing at a second position recessed from an opposing end of the elongated housing to form a space between said first and second tight fits.

The cell holder 20 may be provided by the method of manufacturing the cell holder introduced in the previous embodiment. However, providing of the cell holder 20 may be not limited thereto and may be manufactured in another way. For example, if the space should be void, that is, if the method does not comprise providing a filling material 4, the cell holder may be not overmolded around the filling material but rather be formed to form the space between the first tight fit and the second tight fit.

The method may further comprise: providing a filling material 4. The filling material having lesser density than a coolant may be provided in the space.

The method may further comprise: filling a coolant in the first fluid chamber 31 and the second fluid chamber 32.

The method may further comprise: before providing the plurality of battery cells 1, applying a sealant on a top and a bottom surface of the filling material to each make a first tight fit and a second tight fit perpendicular to a lateral surface of the filling material.

The method may further comprise: providing a fluid inlet port 2 for allowing a coolant flow into the first fluid chamber 31; and a fluid outlet port 3 for allowing a coolant flow from the second fluid chamber 32; wherein the first fluid chamber 31 and the second fluid chamber 32 are connected in a way that a coolant can pass from the first fluid chamber 31 to the second fluid chamber 32.

## Claims

1. A battery module comprising:
a plurality of battery cells (1), each having an elongated housing and having a pole at one end of the elongated housing;
a module housing (10) arranged to accommodate said plurality of battery cells (1); and
a cell holder (20) arranged to hold the individual ones of the plurality of battery cells (1) and at least forming part of a division of an interior of the module housing (10) into a first fluid chamber (31) and a second fluid chamber (32); wherein
the cell holder (20) forms around each battery cell a first tight fit around the elongated housing at a first position recessed from the one end of the elongated housing and a second tight fit around the elongated housing at a second position recessed from an opposing end of the elongated housing to form a space between said first and second tight fits, wherein the battery module further comprises:
a fluid inlet port (2) for allowing a coolant flow into the first fluid chamber (31); **characterized in that** it further comprises
a fluid outlet port (3) for allowing a coolant flow from the second fluid chamber (32); wherein
the first fluid chamber (31) and the second fluid chamber (32) are connected in a way that a coolant can pass from the first fluid chamber (31) to the second fluid chamber (32).

2. The battery module according to claim 1, wherein said space is void that is not filled with a coolant.

3. The battery module according to claim 1, wherein a filling material (4) is arranged in said space.

4. The battery module according to claim 3, wherein
the filling material (4) is a porous material composed of a solid part and a void part, wherein
a density of the filling material (4) is less than 800 kg/m3.

5. The battery module according to claim 3 or 4, wherein the cell holder (20) being formed from thermoplastic is overmolded around the filling material (4).

6. The battery module according to any one of claims 1 to 5, wherein said elongated housing is cylindrical.

7. The battery module according to any one of claims 1 to 6, wherein
said module housing (10) comprises a first lid (11) arranged at least over the one end of the elongated housing of each of the plurality of battery cells (1) and a second lid (12) arranged at least over the opposing end of the elongated housing of each of the plurality of battery cells (1); and
the cell holder (20) further forms an outer wall (21) between the first lid (11) and the second lid (12).

8. The battery module according to claim 7, wherein the cell holder (20) further comprises:
a plurality of holes (22) located on the outer wall (21) and accessible to the first fluid chamber (31) and the second fluid chamber (32).

9. The battery module according to any one of claims 1 to 8, wherein the module housing further comprises:
a third lid (13) and a fourth lid (14) are located on opposite sides to each other and in parallel with an axial direction of the plurality of battery cells (1), wherein
the fluid inlet port (2) and the fluid outlet port (3) are located on the fourth lid (14), and
the first fluid chamber (31) and the second fluid chamber (32) are connected through a space between the third lid (13) and a part of the outer wall (21) facing the third lid (13).

10. The battery module according to claim 9, wherein the cell holder (20) further comprises:
a rib (23) configured to at least form part of a division of a space between the fourth lid (14) and a part of the outer wall (21) facing the fourth lid (14) into a fluid inlet chamber (33) and a fluid outlet chamber (34).

11. The battery module according to claim 9 or 10, wherein the rib (23) is configured to seal a space between the fluid inlet chamber (33) and the fluid outlet chamber (34).

12. The battery module according to any one of claims 10 to 11, wherein a distance between the fluid inlet chamber (33) and the fluid outlet chamber (34) is greater on distal parts of the fluid inlet chamber (33) and the fluid outlet chamber (34).

13. The battery module according to any one of claims 10 to 12, wherein the rib (23) is configured to support a part of the outer wall (21).

14. The battery module according to any one of claims 1 to 13, wherein the cell holder (20) further comprises:
a first sealant and a second sealant, each further making the first tight fit and the second tight fit.

## Patentansprüche

1. Batteriemodul, umfassend:
eine Vielzahl von Batteriezellen (1), die jeweils ein längliches Gehäuse aufweisen und einen Pol an einem Ende des länglichen Gehäuses aufweisen;
ein Modulgehäuse (10), das angeordnet ist, um die Vielzahl von Batteriezellen (1) unterzubringen; und
einen Zellenhalter (20), der angeordnet ist, um die einzelnen der Vielzahl von Batteriezellen (1) zu halten, und mindestens ein Teil einer Unterteilung eines Inneren des Modulgehäuses (10) in eine erste Fluidkammer (31) und eine zweite Fluidkammer (32) bildet; wobei
der Zellenhalter (20) um jede Batteriezelle herum einen ersten Formschluss um das längliche Gehäuse in einer ersten Position bildet, die von dem einen Ende des länglichen Gehäuses eingelassen ist, und einen zweiten Formschluss um das längliche Gehäuse in einer zweiten Position, die von einem gegenüberliegenden Ende des länglichen Gehäuses eingelassen ist, um einen Raum zwischen dem ersten und zweiten Formschluss zu bilden, wobei das Batteriemodul weiter umfasst:
einen Fluideinlassanschluss (2), um es einem Kühlmittel zu ermöglichen, in die erste Fluidkammer (31) zu strömen; **dadurch gekennzeichnet, dass** es weiter umfasst:
einen Fluidauslassanschluss (3), um es einem Kühlmittel zu ermöglichen, aus der zweiten Fluidkammer (32) zu strömen; wobei
die erste Fluidkammer (31) und die zweite Fluidkammer (32) auf eine Weise verbunden sind, dass ein Kühlmittel von der ersten Fluidkammer (31) in die zweite Fluidkammer (32) verlaufen kann.

2. Batteriemodul nach Anspruch 1, wobei der Raum ein Hohlraum ist, der nicht mit Kühlmittel gefüllt ist.

3. Batteriemodul nach Anspruch 1, wobei ein Füllmaterial (4) in dem Raum angeordnet ist.

4. Batteriemodul nach Anspruch 3, wobei das Füllmaterial (4) ein poröses Material ist, das sich aus einem festen Teil und einem Hohlraumteil zusammensetzt, wobei eine Dichte des Füllmaterials (4) geringer als 800 kg/m3 ist.

5. Batteriemodul nach Anspruch 3 oder 4, wobei der Zellenhalter (20), der aus Thermoplast ist, um das Füllmaterial (4) herum überformt ist.

6. Batteriemodul nach einem der Ansprüche 1 bis 5, wobei das längliche Gehäuse zylindrisch ist.

7. Batteriemodul nach einem der Ansprüche 1 bis 6, wobei
das Modulgehäuse (10) einen ersten Deckel (11) umfasst, der mindestens über dem einen Ende des länglichen Gehäuses einer jeden der Vielzahl von Batteriezellen (1) angeordnet ist, und einen zweiten Deckel (12), der mindestens über dem gegenüberliegenden Ende des länglichen Gehäuses einer jeden der Vielzahl von Batteriezellen (1) angeordnet ist; und
der Zellenhalter (20) weiter eine Außenwand (21) zwischen dem ersten Deckel (11) und dem zweiten Deckel (12) bildet.

8. Batteriemodul nach Anspruch 7, wobei der Zellenhalter (20) weiter umfasst:
eine Vielzahl von Löchern (22), die sich an der Außenwand (21) befinden, und der ersten Fluidkammer (31) und der zweiten Fluidkammer (32) zugänglich sind.

9. Batteriemodul nach einem der Ansprüche 1 bis 8, wobei das Modulgehäuse weiter umfasst:
einen dritten Deckel (13) und einen vierten Deckel (14), die sich an gegenüberliegenden Seiten zueinander und parallel zu einer axialen Richtung der Vielzahl von Batteriezellen (1) befinden, wobei
der Fluideinlassanschluss (2) und der Fluidauslassanschluss (3) sich auf dem vierten Deckel (14) befinden, und
die erste Fluidkammer (31) und die zweite Fluidkammer (32) durch einen Raum zwischen dem dritten Deckel (13) und einem Teil der Außenwand (21), die dem dritten Deckel (13) zugewandt ist, verbunden sind.

10. Batteriemodul nach Anspruch 9, wobei der Zellenhalter (20) weiter umfasst:
eine Rippe (23), die ausgebildet ist, um mindestens einen Teil einer Unterteilung eines Raumes zwischen dem vierten Deckel (14) und einem Teil der Außenwand (21), die dem vierten Deckel (14) zugewandt ist, in eine Fluideinlasskammer (33) und eine Fluidauslasskammer (34) zu bilden.

11. Batteriemodul nach Anspruch 9 oder 10, wobei die Rippe (23) ausgebildet ist, um einen Raum zwischen der Fluideinlasskammer (33) und der Fluidauslasskammer (34) abzudichten.

12. Batteriemodul nach einem der Ansprüche 10 bis 11, wobei ein Abstand zwischen der Fluideinlasskammer (33) und der Fluidauslasskammer (34) an distalen Teilen der Fluideinlasskammer (33) und der Fluidauslasskammer (34) größer ist.

13. Batteriemodul nach einem der Ansprüche 10 bis 12, wobei die Rippe (23) ausgebildet ist, um einen Teil der Außenwand (21) zu stützen.

14. Batteriemodul nach einem der Ansprüche 1 bis 13, wobei der Zellenhalter (20) weiter umfasst:
ein erstes Dichtungsmittel und ein zweites Dichtungsmittel, von denen jedes weiter den ersten Formschluss und den zweiten Formschluss erzeugt.

## Revendications

1. Module de batterie comprenant :
une pluralité d'éléments de batterie (1), chacun présentant un boîtier allongé et présentant un pôle au niveau d'une extrémité du boîtier allongé ;
un boîtier (10) de module conçu pour recevoir ladite pluralité d'éléments de batterie (1) ; et
un support (20) d'éléments conçu pour maintenir les éléments individuels de la pluralité d'éléments de batterie (1) et au moins formant une partie d'une division d'un intérieur du boîtier (10) de module en une première chambre de fluide (31) et en une deuxième chambre de fluide (32) ; dans lequel
le support (20) d'éléments forme autour de chaque élément de batterie un premier ajustement serré autour du boîtier allongé à une première position enfoncée par rapport à la une extrémité du boîtier allongé et un deuxième ajustement serré autour du boîtier allongé à une deuxième position enfoncée par rapport à une extrémité opposée du boîtier allongé pour former un espace entre lesdits premier et deuxième ajustements serrés, dans lequel le module de batterie comprend en outre :
un orifice (2) d'entrée de fluide pour permettre un écoulement de réfrigérant dans la première chambre de fluide (31) ; **caractérisé en ce qu'**il comprend en outre un orifice (3) de sortie de fluide pour permettre un écoulement de réfrigérant depuis la deuxième chambre de fluide (32) ; dans lequel
la première chambre de fluide (31) et la deuxième chambre de fluide (32) sont raccordées d'une manière telle qu'un réfrigérant peut passer de la première chambre de fluide (31) à la deuxième chambre de fluide (32).

2. Module de batterie selon la revendication 1, dans lequel ledit espace est un vide qui n'est pas rempli de réfrigérant.

3. Module de batterie selon la revendication 1, dans lequel un matériau de remplissage (4) est disposé dans ledit espace.

4. Module de batterie selon la revendication 3, dans lequel le matériau de remplissage (4) est un matériau poreux composé d'une partie pleine et d'une partie vide, dans lequel une densité du matériau de remplissage (4) est inférieure à 800 kg/m3.

5. Module de batterie selon la revendication 3 ou la revendication 4, dans lequel le support (20) d'éléments qui est formé à partir de thermoplastique est surmoulé autour du matériau de remplissage (4).

6. Module de batterie selon l'une quelconque des revendications 1 à 5, dans lequel ledit boîtier allongé est cylindrique.

7. Module de batterie selon l'une quelconque des revendications 1 à 6, dans lequel ledit boîtier (10) de module comprend un premier couvercle (11) agencé au moins par-dessus la une extrémité du boîtier allongé de chaque élément de la pluralité d'éléments de batterie (1) et un deuxième couvercle (12) agencé au moins par-dessus l'extrémité opposée du boîtier allongé de chaque élément de la pluralité d'éléments de batterie (1) ; et
le support (20) d'éléments forme en outre une paroi externe (21) entre le premier couvercle (11) et le deuxième couvercle (12).

8. Module de batterie selon la revendication 7, dans lequel le support (20) d'éléments comprend en outre :
une pluralité de trous (22) situés sur la paroi externe (21) et accessibles à la première chambre de fluide (31) et à la deuxième chambre de fluide (32).

9. Module de batterie selon l'une quelconque des revendications 1 à 8, dans lequel le boîtier de module comprend en outre :
un troisième couvercle (13) et un quatrième couvercle (14) qui sont situés sur des côtés opposés l'un de l'autre et parallèlement à une direction axiale de la pluralité d'éléments (1) de batterie, dans lequel
l'orifice (2) d'entrée de fluide et l'orifice (3) de sortie de fluide sont situés sur le quatrième couvercle (14), et
la première chambre de fluide (31) et la deuxième chambre de fluide (32) sont raccordées par le biais d'un espace entre le troisième couvercle (13) et une partie de la paroi externe (21) faisant face au troisième couvercle (13).

10. Module de batterie selon la revendication 9, dans lequel le support (20) d'éléments comprend en outre :
une nervure (23) configurée pour au moins former une partie d'une division d'un espace entre le quatrième couvercle (14) et une partie de la paroi externe (21) faisant face au quatrième couvercle (14) en une chambre (33) d'entrée de fluide et en une chambre (34) de sortie de fluide.

11. Module de batterie selon la revendication 9 ou la revendication 10, dans lequel la nervure (23) est configurée pour sceller un espace entre la chambre (33) d'entrée de fluide et la chambre (34) de sortie de fluide.

12. Module de batterie selon l'une quelconque des revendications 10 à 11, dans lequel une distance entre la chambre (33) d'entrée de fluide et la chambre (34) de sortie de fluide est plus grande sur des parties distales de la chambre (33) d'entrée de fluide et la chambre (34) de sortie de fluide.

13. Module de batterie selon l'une quelconque des revendications 10 à 12, dans lequel la nervure (23) est configurée pour supporter une partie de la paroi externe (21).

14. Module de batterie selon l'une quelconque des revendications 1 à 13, dans lequel le support (20) d'éléments comprend en outre :
un premier agent d'étanchéité et un deuxième agent d'étanchéité, chacun créant en outre le premier ajustement serré et le deuxième ajustement serré.
